Europäisches Patentamt

European Patent Office

Office européen des brevets

(19)

(11) EP 0 502 560 B1

(12) FASCICULE DE BREVET EUROPEEN

(45) Date de publication et mention
de la délivrance du brevet:
**17.07.1996 Bulletin 1996/29**

(51) Int Cl.⁶: **C08L 51/00**, C08L 27/06
// (C08L27/06, 51:00, 51:00),
(C08L51/00, 27:06, 51:00)

(21) Numéro de dépôt: **92200167.2**

(22) Date de dépôt: **22.01.1992**

(54) **Compositions résistant aux chocs à base de polymères du chlorure de vinyle et leur utilisation**

Schlagfeste Zusammensetzungen auf Basis von Polyvinylchloridpolymeren und deren Verwendung

Shock resistant compositions based on vinyl chloride polymers and their use

(84) Etats contractants désignés:
AT BE CH DE DK ES FR GB GR IT LI LU NL PT SE

(30) Priorité: **01.02.1991 BE 9100099**

(43) Date de publication de la demande:
**09.09.1992 Bulletin 1992/37**

(73) Titulaire: **SOLVAY (Société Anonyme)
B-1050 Bruxelles (BE)**

(72) Inventeurs:
• **Gloesener, Daniel
B-5380 Sart D'Avril-Fernelmont (BE)**

• **Lamberty, Philippe
B-1120 Bruxelles (BE)**

(74) Mandataire: **Marckx, Frieda et al
Solvay S.A.
Département de la Propriété Industrielle
310, rue de Ransbeek
B-1120 Bruxelles (BE)**

(56) Documents cités:
**FR-A- 2 231 695       FR-A- 2 319 665**

## Description

La présente invention concerne des compositions résistant aux chocs à base de polymères du chlorure de vinyle et leur utilisation. Elle concerne plus particulièrement des compositions à base de polymères du chlorure de vinyle comprenant des polymères du chlorure de vinyle greffés sur des polymères renforçants, ainsi que l'utilisation de ces compositions pour l'extrusion de profilés.

Il est bien connu de recourir pour l'extrusion de profilés en polychlorure de vinyle, tels que des profilés pour châssis à usage extérieur, à des compositions comprenant des polymères renforçants, généralement de nature élastomérique, tels que, par exemple, des polymères d'acrylates d'alkyles ou encore des copolymères d'éthylène et d'acétate de vinyle. Ces compositions sont obtenues soit par mélange externe de polychlorure de vinyle avec des polymères renforçants du type précité, soit par utilisation de polychlorure de vinyle modifié "in situ" par polymérisation avec greffage de chlorure de vinyle sur de tels polymères renforçants. Quelque soit le mode d'incorporation des polymères renforçants, les compositions à base de polychlorure de vinyle spécifiquement recommandées pour l'extrusion de profilés pour châssis à usage extérieur comprennent généralement de 6 à 10 parties en poids environ de polymère renforçant pour 100 parties en poids du total des constituants polymériques de la composition, ainsi que quelques pourcents de carbonate de calcium à fine granulométrie enrobé d'acide gras. De telles compositions permettent habituellement de satisfaire aux marques de qualité pour châssis de fenêtres imposées dans certains pays, telles que par exemple la marque de qualité allemande RAL imposant une résilience avec simple entaille en U sur plaque pressée de 4 mm d'épaisseur (selon la norme DIN 53453) supérieure à 20 kJ/m$^2$ et une résilience avec double entaille en V ( selon la norme DIN 53753) supérieure à 40 kJ/m$^2$. Néanmoins, les polymères renforçants contribuent généralement à réduire la résistance au vieillissement et la rigidité des compositions à base de polychlorure de vinyle auxquelles ils sont incorporés.

La présente invention a pour but de procurer des compositions résistant aux chocs à base de polymères du chlorure de vinyle d'une efficacité supérieure permettant, dès lors, d'atteindre des performances au moins équivalentes sur le plan de la résistance aux chocs à moindre teneur globale en polymères renforçants.

A cet effet, la présente invention concerne des compositions résistant aux chocs à base de polymères du chlorure de vinyle, caractérisées en ce qu'elles comprennent à titre de polymères du chlorure de vinyle :

(a) de 40 à 60 parties de copolymère greffé de chlorure de vinyle sur du polyacrylate de butyle faiblement réticulé contenant de 2 à 10 % en poids de polyacrylate de butyle faiblement réticulé,
(b) de 10 à 50 parties de copolymère greffé de chlorure de vinyle sur un copolymère d'éthylène et d'acétate de vinyle contenant de 0,5 à 7 % en poids de copolymère d'éthylène et d'acétate de vinyle dont la viscosité intrinsèque, mesurée à 20°C dans le m-xylène, est comprise entre environ 0,05 et 0,10 l/g,
(c) de 10 à 50 parties de polymère non modifié du chlorure de vinyle pour 100 parties en poids au total de polymères du chlorure de vinyle, et, à titre de charge renforçante :
(d) de 4 à 10 parties de carbonate de calcium en particules de diamètre moyen inférieur à 1 µm enrobées d'acide gras pour 100 parties en poids de polymères du chlorure de vinyle.

Les copolymères greffés de chlorure de vinyle sur du polyacrylate de butyle faiblement réticulé, ci-après désignés par le vocable "polymères (a)", ainsi que les copolymères greffés de chlorure de vinyle sur un copolymère d'éthylène et d'acétate de vinyle, ci-après désignés par le vocable "polymères (b)", constituent des polymères connus en tant que tels.

Par polyacrylate de butyle faiblement réticulé, on entend désigner les polyacrylates de butyle ayant un taux de réticulation inférieur à environ 1 %. La réticulation s'obtient par mise en oeuvre à la polymérisation de l'acrylate de butyle d'une faible quantité d'un comonomère comprenant plusieurs insaturations éthyléniques, tel que, par exemple, du phtalate de diallyle ou du maléate de diallyle. Un mode de fabrication avantageux des polymères (a) consistant à greffer du chlorure de vinyle en suspension aqueuse sur un latex de polyacrylate de butyle réticulé est décrit dans le brevet DE-B-1 090 857 (BASF).

Les polymères (a) auxquels on donne la préférence contiennent de 4 à 8 % en poids environ de polyacrylate de butyle faiblement réticulé.

Par copolymère d'éthylène et d'acétate de vinyle, on entend désigner les copolymères contenant de 50 à 80 % en poids d'éthylène, le solde étant constitué d'acétate de vinyle. Un mode de fabrication avantageux des polymères (b) qui consiste à prédisperser le copolymère d'éthylène et d'acétate de vinyle dans le chlorure de vinyle en présence d'eau avant de soumettre ce dernier à une polymérisation en suspension aqueuse est décrite dans la demande de brevet EP-A-0 074 139 (SOLVAY & Cie).

Les polymères (b) auxquels on donne la préférence contiennent de 1,5 à 5 % en poids environ de copolymère d'éthylène et d'acétate de vinyle.

Par polymère non modifié du chlorure de vinyle, ci-après désigné par le vocable "polymère (c)", on entend désigner les polymères du chlorure de vinyle ne contenant pas de polymère renforçant. Les polymères (c) auxquels on donne la préférence sont constitués d'homopolymères du chlorure de vinyle. A titre d'exemples de pareils homopolymères, on peut mentionner les homopolymères du chlorure de vinyle obtenus par polymérisation en suspension aqueuse présentant un nombre K (mesuré à 25°C dans la cyclohexanone à raison de 5g/l) allant de 60 à 70 et plus particulièrement de 64 à 70, ainsi que les homopolymères du chlorure de vinyle obtenus par polymérisation en émulsion aqueuse présentant un nombre K allant de 68 à 80, plus particulièrement encore de 72 à 76. Des polymères (c) qui sont tout particulièrement préférés sont les homopolymères du chlorure de vinyle obtenus par polymérisation en émulsion aqueuse ayant un nombre K (mesuré dans les conditions précitées) allant de 72 à 76.

Par carbonate de calcium en particules enrobées d'acide gras, on entend désigner les carbonates de calcium en particules enrobées d'un acide gras contenant de 10 à 24 atomes de carbone et leurs mélanges. De préférence, les acides gras contiennent de 12 à 22 atomes de carbone. Le plus couramment, ces acides gras sont constitués de mélanges d'acides stéarique et palmitique.

On donne, par ailleurs, la préférence aux carbonates de calcium, naturels ou précipités, en particules de diamètre moyen compris entre 0,05 et 0,2 μm et, plus particulièrement entre 0,05 et 0,1 μm.

Un aspect surprenant des compositions selon l'invention réside dans le fait que pour des teneurs globales identiques en agents renforçants, elles procurent des résiliences sur entaille simple en U et sur entaille double en V très largement supérieures à celles de compositions contenant exclusivement du polyacrylate de butyle à titre d'agent renforçant. Les compositions selon l'invention sont par ailleurs plus faciles à mettre en oeuvre et présentent une soudabilité (mesurée par le biais de la résistance en traction statique d'assemblages soudés) peu sensible aux variations de la température de soudage.

Des compositions selon l'invention qui sont préférées comprennent à titre de polymères du chlorure de vinyle :

(a) de 45 à 55 parties de copolymère greffé de chlorure de vinyle sur du polyacrylate de butyle faiblement réticulé,
(b) de 20 à 40 parties de copolymère greffé de chlorure de vinyle sur un copolymère d'éthylène et d'acétate de vinyle,
(c) de 20 à 40 parties de polymère non modifié du chlorure de vinyle pour 100 parties en poids de polymères du chlorure de vinyle et, à titre de charge renforçante,
(d) de 5 à 8 parties de carbonate de calcium pour 100 parties en poids de polymères du chlorure de vinyle.

Suivant un autre aspect préféré de l'invention, la somme des teneurs en polyacrylate de butyle faiblement réticulé et en copolymère d'éthylène et d'acétate de vinyle des compositions est inférieure à 6 parties et, par ailleurs, supérieure à 2 parties pour 100 parties en poids au total de polymères du chlorure de vinyle. Des compositions particulièrement préférées sont celles dont la teneur en polyacrylate de butyle faiblement réticulé s'élève à 2 parties au moins et la teneur en copolymère d'éthylène et d'acétate de vinyle à 0,25 partie au moins, la somme des teneurs en polyacrylate de butyle faiblement réticulé et en copolymère d'éthylène et d'acétate de vinyle ne dépassant pas 4,5 parties en poids pour 100 parties en poids au total de polymères du chlorure de vinyle.

Outre les polymères du chlorure de vinyle et la charge renforçante caractéristiques décrits ci-dessus, les compositions selon l'invention peuvent contenir tous les ingrédients usuels utilisés dans les compositions à base de polymères du chlorure de vinyle, tels que des stabilisants thermiques, des agents facilitant la mise en oeuvre, des lubrifiants, des pigments etc. Les compositions selon l'invention peuvent être mises en oeuvre sous la forme de poudres ou de granules, la préférence étant donnée à ces derniers.

Les compositions selon l'invention conviennent particulièrement pour l'extrusion de profilés, plus particulièrement encore de profilés pour châssis à usage extérieur. L'utilisation des compositions selon l'invention pour l'extrusion de profilés, plus particulièrement encore de profilés pour châssis à usage extérieur, constitue un autre aspect de la présente invention.

Les exemples qui suivent sont destinés à illustrer l'invention.

L'exemple 1 illustre une composition selon l'invention comprenant au total 3,5 parties de polymères renforçants, soit 3 parties de polyacrylate de butyle faiblement réticulé (présent sous la forme d'un copolymère greffé de chlorure de vinyle sur un polyacrylate de butyle faiblement réticulé) et 0,5 partie de copolymère d'éthylène et d'acétate de vinyle (présent sous la forme d'un copolymère de chlorure de vinyle greffé sur un copolymère d'éthylène et d'acétate de vinyle).

Les exemples 2 et 3 donnés à titre comparatif comprennent exclusivement à titre de polymère renforçant respectivement 3 et 3,9 parties de polyacrylate de butyle faiblement réticulé (présent sous la forme d'un copolymère de chlorure de vinyle greffé sur un polyacrylate de butyle faiblement réticulé).

L'exemple 4 illustre une composition selon l'invention comprenant au total 4 parties de polymères renforçants, soit 3,6 parties de polyacrylate de butyle faiblement réticulé (présent sous la forme d'un copolymère greffé de chlorure de vinyle sur un polyacrylate de butyle faiblement réticulé) et 0,4 partie de copolymère d'éthylène et d'acétate de vinyle (présent sous la forme d'un copolymère de chlorure de vinyle greffé sur un copolymère d'éthylène et d'acétate de vinyle).

Les polymères du chlorure de vinyle mis en oeuvre dans les exemples sont les suivants :

- polymère (a) : copolymère obtenu par polymérisation en suspension aqueuse de chlorure de vinyle en présence d'un latex de polyacrylate de butyle faiblement réticulé (taux de réticulation < 1 %) contenant 94 parties en poids de polychlorure de vinyle pour 6 parties en poids de polyacrylate de butyle faiblement réticulé.
- polymère (b) : copolymère de nombre K égal à 68 (exemples 1 à 3), respectivement à 64 (exemple 4) (à 25°C dans la cyclohexanone à raison de 5 g/l) obtenu par polymérisation du chlorure de vinyle en suspension aqueuse sur un copolymère d'éthylène et d'acétate de vinyle contenant 60 % en poids d'éthylène dont la viscosité intrinsèque, mesurée à 20°C dans le m-xylène, s'élève à 0,08 g/l, contenant 98 parties en poids de polychlorure de vinyle pour 2 parties en poids de copolymère d'éthylène et d'acétate de vinyle.
- polymère (c) : homopolymère du chlorure de vinyle obtenu en émulsion aqueuse ayant un nombre K (mesuré à 25°C dans la cyclohexanone à raison de 5g/l) égal à 73 (PVC-E) ou en suspension aqueuse ayant un nombre K (mêmes conditions) égal à 64 (PVC-S).

La charge renforçante (d) est constituée par du carbonate de calcium précipité en particules dont le diamètre moyen est égal à 0,08 µm enrobées d'acide stéarique.

Les compositions préparées et évaluées sont les suivantes, les teneurs étant exprimées en poids :

|  | Exemple 1 | Exemple 2 | Exemple 3 | Exemple 4 |
|---|---|---|---|---|
| Constituants polymériques : |  |  |  |  |
| Polymère (a) | 50 | 50 | 65 | 60 |
| Polymère (b) | 25 |  |  | 20 |
| Polymère (c): |  |  |  |  |
| PVC-E | 25 | 10 | 15 | 20 |
| PVC-S |  | 40 | 20 |  |
| Charge renforçante (d) : | 6,25 | 6,25 | 6,25 | 6,25 |

Ingrédients de mise en oeuvre : (identiques en nature et en quantités dans les quatre exemples)

| | |
|---|---|
| Phosphite dibasique de plomb | 3,5 |
| Stéarate dibasique de plomb | 1,5 |
| Stéarate de calcium | 0,5 |
| Costabilisant de type phosphite | 0,25 |
| Esters d'acides et d'alcools gras (lubrifiants) | 0,6 |
| Polymère acrylique facilitant la mise en oeuvre | 1 |
| Oxyde de titane | 4 |

La composition selon l'exemple 4 contient en plus

| | |
|---|---|
| Cires de polyéthylène | 0,15 |

Des prémélanges ont été préparés dans un mélangeur lent, puis gélifiés sur un malaxeur interne pendant 2,5 minutes environ pour être déchargés à 160°C sur un malaxeur à cylindres ; les températures pour les cylindres avant et arrière étant respectivement de 150 et 145°C. Une bande en est prélevée, refroidie dans un bac d'eau, puis passe dans le granulateur.

Au départ des granules ainsi obtenus, on a pressé des plaques dans les conditions reprises dans la norme DIN 7748 pour évaluer la résilience Charpy avec simple entaille en U selon la norme DIN 53453 (éprouvette 50 x 6 x 4 mm).

D'autre part, des profilés ont été extrudés sur machine double-vis à vis coniques à un débit de 120 kg/h avec le profil de températures suivant :

- fourreau 190°C-170°C-150°C
- raccord 160°C
- plaque à trous 165°C
- tête 165°C

- filière          185°C
- conditionnement vis          160°C

La résilience Charpy avec double entaille en V a été évaluée, selon la norme DIN 53753 (rayon d'entaille 0,1 mm), sur des éprouvettes de 3 mm d'épaisseur prélevées dans la face extérieure des profilés.

Sur des éprouvettes identiques, on a évalué la résilience Charpy avec simple entaille en V selon la norme BS 2782 méthode 359 (pour PVC modifié).

Des profilés ont également été soudés dans les conditions suivantes :

- température du miroir chauffant          : 265 et 245°C
- déplacement du profilé contre le miroir          : 5,7 mm
- déplacement du profilé lors de l'assemblage          : 1,4 mm
- durée de préchauffage des profilés lors de l'avance contre le miroir          : 15 s
- durée de préchauffage des profilés à l'arrêt contre le miroir          : 20 s
- temps d'application des profilés l'un contre l'autre lors de l'assemblage          : 40 s
- longueurs des branches depuis l'angle intérieur des coins soudés          : 32 cm
- les bourrelets qui se sont formés lors de la soudure n'ont pas été fraisés.

La qualité des soudures a été évaluée par mesure de la résistance en traction quasi-statique des coins soudés après un conditionnement thermique des profilés pendant 12 heures à 23 degrés dans la salle isotherme où s'est effectuée l'évaluation dont les conditions sont détaillées ci-après :

- placer une des branches du coin soudé munie de contre-cales adaptées à la forme du profilé, verticalement contre le support rigide de la machine de test. Les contre-cales sont telles qu'elles évitent le serrage sur les feuillures. La branche horizontale est en position haute.
- serrer à l'aide d'un piston l'extérieur du coin
- serrer à l'aide de deux autres pistons les faces latérales du coin.
- la machine de test pousse, à l'aide d'un piston à tête circulaire, la branche horizontale du coin, verticalement vers le haut.

    . Vitesse de poussée : 50 mm/min
    . Distance de l'angle intérieur du coin soudé à l'axe de poussée : 30 cm

- l'effort maximal est relevé à la rupture du coin
- les moments d'inertie des profilés sont évalués à l'aide d'une prise de mesure par caméra vidéo et de calcul par un logiciel adapté.
- les tensions de rupture sigma sont calculées à l'aide de la formule suivante :

$$\text{sigma [MPa]} = P \text{ [N]} \cdot d \text{ [mm]} \cdot v \text{ [mm]} / l \text{ [mm4]}$$

où

P :     effort de rupture
d :     distance du coin intérieur au point de poussée du piston ($= 30$ cm)
v :     distance de la fibre neutre du profilé à la fibre extrême soumise à traction lors du test
l :     moment d'inertie par rapport à l'axe correspondant à la flexion simple du profilé

Dans le Tableau en annexe sont consignés les résultats de l'évaluation des résiliences CHARPY , y compris l'écart-type mesuré sur 10 éprouvettes, et de la soudabilité par le biais de la résistance en traction statique des assemblages soudés.

La comparaison des résultats des exemples 1 et 4 selon l'invention avec ceux des exemples comparatifs 2 et 3 à teneurs globales similaires en agents renforçants montre la supériorité appréciable des compositions selon l'invention sur le plan des résiliences Charpy avec simple entaille en U, avec simple entaille en V et avec double entaille en V, ainsi que de la soudabilité laquelle est pratiquement insensible à une variation de la température de soudage par opposition à celle des compositions évaluées à titre comparatif.

TABLEAU

|  | Ex. 1 | Ex. 2 | Ex. 3 | Ex. 4 |
|---|---|---|---|---|
| Résilience Charpy simple entaille en U selon norme DIN 53453 (kJ/m2)<br>Ecart-type (kJ/m2) | 50<br>8.5 | 32<br>12.3 | 33<br>13.6 | 51<br>7.5 |
| Résilience Charpy double entaille en V selon norme DIN 53753 (kJ/m2)<br>Ecart-type (kJ/m2) | 50<br>4.7 | 38<br>9.6 | 45<br>8.6 | 52.5<br>3.5 |
| Résilience Charpy simple entaille en V selon norme BS 2782, méthode 359 (kJ/m2)<br>Ecart-type (kJ/m2) | * | 7.15**<br><br>0.7 | 8.40**<br><br>0.7 | * |
| Résistance des assemblages soudés en traction statique (MPa)<br>température de soudage = 265°C<br>température de soudage = 245°C | <br>54<br>50 | <br>55<br>30 | <br>53<br>29 | <br>53<br>50 |

* Ruptures exclusivement ductiles

** Ruptures exclusivement fragiles

**Revendications**

1. Compositions résistant aux chocs à base de polymères du chlorure de vinyle, caractérisées en ce qu'elles comprennent à titre de polymères du chlorure de vinyle:

   (a) de 40 à 60 parties de copolymère greffé de chlorure de vinyle sur du polyacrylate de butyle faiblement réticulé ayant un taux de réticulation inférieur à 1 % et contenant de 2 à 10 % en poids de polyacrylate de butyle faiblement réticulé,
   (b) de 10 à 50 parties de copolymère greffé de chlorure de vinyle sur un copolymère d'éthylène et d'acétate de vinyle contenant de 0,5 à 7 % en poids de copolymère d'éthylène et d'acétate de vinyle contenant de 50 à 80 % en poids d'éthylène et dont la viscosité intrinsèque, mesurée à 20°C dans le m-xylène, est comprise entre 0,05 et 0,10 l/g,
   (c) de 10 à 50 parties de polymère non modifié du chlorure de vinyle pour 100 parties en poids au total de polymères du chlorure de vinyle, et, à titre de charge renforçante:
   (d) de 4 à 10 parties de carbonate de calcium en particules dont le diamètre moyen est inférieur à 1 µm enrobées d'acide gras pour 100 parties en poids de polymères du chlorure de vinyle.

2. Compositions résistant aux chocs selon la revendication 1, caractérisées en ce que le polymère du chlorure de vinyle (a) contient de 4 à 8 % en poids de polyacrylate de butyle faiblement réticulé.

3. Compositions résistant aux chocs selon la revendication 1, caractérisées en ce que le polymère du chlorure de vinyle (b) contient de 1,5 à 5 % en poids de copolymère d'éthylène et d'acétate de vinyle.

4. Compositions résistant aux chocs selon la revendication 1, caractérisées en ce que le polymère du chlorure de vinyle (c) est constitué d'un homopolymère du chlorure de vinyle.

5. Compositions résistant aux chocs selon l'une quelconque des revendications 1 à 4, caractérisées en ce qu'elles comprennent à titre de polymères du chlorure de vinyle :

   (a) de 45 à 55 parties de copolymère greffé de chlorure de vinyle sur du polyacrylate de butyle faiblement réticulé ,
   (b) de 20 à 40 parties de copolymère greffé de chlorure de vinyle sur un copolymère d'éthylène et d'acétate de vinyle,
   (c) de 20 à 40 parties de polymère non modifié du chlorure de vinyle pour 100 parties en poids au total de polymères du chlorure de vinyle , et, à titre de charge renforçante,
   (d) de 5 à 8 parties de carbonate de calcium pour 100 parties en poids de polymères du chlorure de vinyle.

6. Compositions résistant aux chocs selon l'une quelconque des revendications 1 à 5, caractérisées en ce que la somme des teneurs en polyacrylate de butyle faiblement réticulé et en copolymère d'éthylène et d'acétate de vinyle est inférieure à 6 parties pour 100 parties en poids des polymères du chlorure de vinyle.

**7.** Compositions résistant aux chocs selon l'une quelconque des revendications 1 à 5, caractérisées en ce que la somme des teneurs en polyacrylate de butyle faiblement réticulé et en copolymère d'éthylène et d'acétate de vinyle est supérieure à 2 parties pour 100 parties en poids des polymères du chlorure de vinyle.

**8.** Compositions résistant aux chocs selon l'une quelconque des revendications 1 à 7, caractérisées en ce que la teneur en polyacrylate de butyle faiblement réticulé s'élève à 2 parties au moins et la teneur en copolymère d'éthylène et d'acétate de vinyle à 0,25 partie au moins, la somme des teneurs en polyacrylate de butyle faiblement réticulé et en copolymère d'éthylène et d'acétate de vinyle ne dépassant pas 4,5 parties en poids pour 100 parties en poids au total de polymères du chlorure de vinyle.

**9.** Utilisation des compositions selon l'une quelconque des revendications 1 à 8 pour l'extrusion de profilés.

**10.** Utilisation selon la revendication 9 pour l'extrusion de profilés pour châssis à usage extérieur.


**Claims**

**1.** Impact-resistant compositions based on vinyl chloride polymers, characterised in that they comprise, by way of vinyl chloride polymers:

(a) from 40 to 60 parts of graft copolymer of vinyl chloride with lightly crosslinked polybutyl acrylate having a degree of crosslinking of less than 1% and containing from 2 to 10% by weight of lightly crosslinked polybutyl acrylate,
(b) from 10 to 50 parts of graft copolymer of vinyl chloride with an ethylene/vinyl acetate copolymer containing from 0.5 to 7% by weight of ethylene/vinyl acetate copolymer containing from 50 to 80% by weight of ethylene and having an intrinsic viscosity, measured at 20°C in m-xylene, of between 0.05 and 0.10 l/g,
(c) from 10 to 50 parts of unmodified vinyl chloride polymer per 100 parts by weight in total of vinyl chloride polymers, and, by way of a reinforcing filler:
(d) from 4 to 10 parts of calcium carbonate in fatty acid-coated particles having an average diameter of less than 1 μm per 100 parts by weight of vinyl chloride polymers.

**2.** Impact-resistant compositions according to Claim 1, characterised in that the vinyl chloride polymer (a) contains from 4 to 8% by weight of lightly crosslinked polybutyl acrylate.

**3.** Impact-resistant compositions according to Claim 1, characterised in that the vinyl chloride polymer (b) contains from 1.5 to 5% by weight of ethylene/vinyl acetate copolymer.

**4.** Impact-resistant compositions according to Claim 1, characterised in that the vinyl chloride polymer (c) consists of a vinyl chloride homopolymer.

**5.** Impact-resistant compositions according to any one of Claims 1 to 4, characterised in that they comprise, by way of vinyl chloride polymers:

(a) from 45 to 55 parts of graft copolymer of vinyl chloride with lightly crosslinked polybutyl acrylate,
(b) from 20 to 40 parts of graft copolymer of vinyl chloride with an ethylene/vinyl acetate copolymer,
(c) from 20 to 40 parts of unmodified vinyl chloride polymer per 100 parts by weight in total of vinyl chloride polymers and, by way of a reinforcing filler,
(d) from 5 to 8 parts of calcium carbonate per 100 parts by weight of vinyl chloride polymers.

**6.** Impact-resistant compositions according to any one of Claims 1 to 5, characterised in that the sum of the contents of lightly crosslinked polybutyl acrylate and of ethylene/vinyl acetate copolymer is less than 6 parts per 100 parts by weight of the vinyl chloride polymers.

**7.** Impact-resistant compositions according to any one of Claims 1 to 5, characterised in that the sum of the contents of lightly crosslinked polybutyl acrylate and of ethylene/vinyl acetate copolymer is greater than 2 parts per 100 parts by weight of the vinyl chloride polymers.

8. Impact-resistant compositions according to any one of Claims 1 to 7, characterised in that the content of lightly crosslinked polybutyl acrylate amounts to at least 2 parts and the content of ethylene/vinyl acetate copolymer to at least 0.25 part, the sum of the contents of lightly crosslinked polybutyl acrylate and of ethylene/vinyl acetate copolymer not exceeding 4.5 parts by weight per 100 parts by weight in total of vinyl chloride polymers.

9. Use of the compositions according to any one of Claims 1 to 8 for profile extrusion.

10. Use according to Claim 9 for the extrusion of profiles for frames for outdoor use.

**Patentansprüche**

1. Schlagfeste Zusammensetzungen auf der Basis von Vinylchloridpolymeren, dadurch gekennzeichnet, daß sie als Vinylchloridpolymere umfassen:

    (a) 40 bis 60 Teile Pfropfcopolymer von Vinylchlorid auf schwach vernetztem Polybutylacrylat mit einem Vernetzungsgrad kleiner 1%, das 2 bis 10 Gew.-% schwach vernetztes Polybutylacrylat enthält,
    (b) 10 bis 50 Teile Pfropfcopolymer von Vinylchlorid auf einem Ethylen-Vinylacetat-Copolymer, das 0,5 bis 7 Gew.-% Ethylen-Vinylacetat-Copolymer enthält, welches 50 bis 80 Gew.-% Ethylen enthält, und dessen Grenzviskosität, gemessen bei 20 °C in m-Xylol, zwischen 0,05 und 0,10 l/g liegt,
    (c) 10 bis 50 Teile nicht modifiziertes Vinylchloridpolymer pro 100 Gewichtsteile der gesamten Vinylchloridpolymere, und als Verstärkungsfüllstoff:
    (d) 4 bis 10 Teile Calciumcarbonat in mit Fettsäure umhüllten Teilchen, deren mittlerer Durchmesser kleiner als 1 µm ist, pro 100 Gewichtsteile Vinylchloridpolymere.

2. Schlagfeste Zusammensetzungen gemäß Anspruch 1, dadurch gekennzeichnet, daß das Vinylchloridpolymer (a) 4 bis 8 Gew.-% schwach vernetztes Polybutylacrylat enthält.

3. Schlagfeste Zusammensetzungen gemäß Anspruch 1, dadurch gekennzeichnet, daß das Vinylchloridpolymer (b) 1,5 bis 5 Gew.-% Ethylen-Vinylacetat-Copolymer enthält.

4. Schlagfeste Zusammensetzungen gemäß Anspruch 1, dadurch gekennzeichnet, daß das Vinylchloridpolymer (c) aus einem Vinylchloridhomopolymer besteht.

5. Schlagfeste Zusammensetzungen gemäß einem der Ansprüche 1 bis 4, dadurch gekennzeichnet, daß sie als Vinylchloridpolymere enthalten:

    (a) 45 bis 55 Teile Pfropfcopolymer von Vinylchlorid auf schwach vernetztem Polybutylacrylat,
    (b) 20 bis 40 Teile Pfropfcopolymer von Vinylchlorid auf einem Ethylen-Vinylacetat-Copolymer,
    (c) 20 bis 40 Teile nicht modifiziertes Vinylchloridpolymer pro 100 Gewichtsteile der gesamten Vinylchloridpolymere, und als Verstärkungsfüllstoff:
    (d) 5 bis 8 Teile Calciumcarbonat pro 100 Gewichtsteile Vinylchloridpolymere.

6. Schlagfeste Zusammensetzungen gemäß einem der Ansprüche 1 bis 5, dadurch gekennzeichnet, daß die Summe der Gehalte an schwach vernetztem Polybutylacrylat und an Ethylen-Vinylacetat-Copolymer kleiner als 6 Teile pro 100 Gewichtsteile der Vinylchloridpolymere ist.

7. Schlagfeste Zusammensetzungen gemäß einem der Ansprüche 1 bis 5, dadurch gekennzeichnet, daß die Summe der Gehalte an schwach vernetztem Polybutylacrylat und an Ethylen-Vinylacetat-Copolymer größer als 2 Teile pro 100 Gewichtsteile der gesamten Vinylchloridpolymere ist.

8. Schlagfeste Zusammensetzungen gemäß einem der Ansprüche 1 bis 7, dadurch gekennzeichnet, daß der Gehalt an schwach vernetztem Polybutylacrylat wenigstens 2 Teile und der Gehalt an Ethylen-Vinylacetat-Copolymer wenigstens 0,25 Teile beträgt, wobei die Summe der Gehalte an schwach vernetztem Polybutylacrylat und an Ethylen-Vinylacetat-Copolymer 4,5 Gewichtsteile pro 100 Gewichtsteile der gesamten Vinylchloridpolymere nicht überschreitet.

9. Verwendung der Zusammensetzungen gemäß einem der Ansprüche 1 bis 8 zur Extrusion von Profilen.

10. Verwendung gemäß Anspruch 9 zur Extrusion von draußen verwendbaren Rahmenprofilen.